# DEMANDE DE BREVET EUROPEEN

(11) **EP 4 736 609 A1**
(43) Date de publication de la demande: **06.05.2026**
(21) Numéro de dépôt: 25211908.6
(22) Date de dépôt: 29.10.2025
(51) Int. Cl.: A01B 51/04, A01B 59/042, A01B 63/32, A01B 13/08, A01B 49/02, A01B 73/04

(54) **MACHINE DE TRAVAIL DU SOL**

(30) Priorité: 31.10.2024 FR 2411928
(71) Demandeur: EVAGRO CONCEPT, 44850 Ligné (FR)
(72) Inventeur: EVIN, Michel, 44850 LIGNE (FR)
(74) Mandataire: Jacobacci & Partners France

(57) **Abrégé**

Machine (1) de travail du sol comprenant un châssis principal (2), des organes (3) d'appui au sol du châssis principal (2), des outils de travail du sol couplés au châssis principal (2), un timon (5) d'attelage du châssis principal (2) raccordé à son extrémité arrière (6) au châssis principal (2) et équipé à son extrémité avant (7) opposée d'un organe d'attelage (8), ledit timon (5) étant incliné depuis un point bas formé par l'extrémité avant (7) du timon (5) vers un point haut formé par l'extrémité arrière (6) dudit timon (5) pour former avec ledit châssis principal (2) un angle ouvert en direction du sol.

La machine (1) comprend au moins un châssis porte-outil supplémentaire auxiliaire (9) porté par le timon (5), ce châssis auxiliaire (9), équipé d'un ou plusieurs outils de travail du sol, étant monté mobile à coulissement le long du timon (5) dans le sens d'un rapprochement ou d'un écartement de l'organe d'attelage (8).

## Description

La présente invention concerne une machine de travail du sol.

Elle concerne en particulier une machine de travail du sol comprenant un châssis dit principal, au moins un organe d'appui au sol du châssis principal, des outils de travail du sol couplés au châssis principal, un timon d'attelage du châssis principal raccordé à l'une des extrémités dite arrière au châssis principal et équipé à son extrémité dite avant opposée d'un organe d'attelage, ledit timon étant, à l'état positionné au sol du ou d'au moins l'un des organes d'appui au sol, incliné depuis un point bas formé par l'extrémité avant du timon vers un point haut formé par l'extrémité arrière dudit timon pour former avec ledit châssis principal un angle ouvert en direction du sol.

Les machines de travail du sol doivent de plus en plus permettre en un seul passage un grand nombre d'opérations de travail du sol sans nuire à l'encombrement en longueur de la machine qui est aujourd'hui limité de manière normative pour permettre un transport sur route de la machine. Ces machines doivent pouvoir également s'adapter à différents types de culture. On est donc à la recherche de solutions permettant de répondre à ces objectifs.

Un but de l'invention est de proposer une machine dont la conception permet de limiter l'encombrement en longueur de la machine sans nuire à sa polyvalence.

À cet effet, l'invention a pour objet une machine de travail du sol comprenant un châssis dit principal, au moins un organe d'appui au sol du châssis principal, des outils de travail du sol couplés au châssis principal, un timon d'attelage du châssis principal raccordé à l'une des extrémités dite arrière au châssis principal et équipé à son extrémité dite avant opposée d'un organe d'attelage, ledit timon étant, à l'état positionné au sol du ou d'au moins l'un des organes d'appui au sol, incliné depuis un point bas formé par l'extrémité avant du timon vers un point haut formé par l'extrémité arrière dudit timon pour former avec ledit châssis principal un angle ouvert en direction du sol, caractérisée en ce que la machine comprend au moins un châssis porte-outil supplémentaire dit auxiliaire porté par le timon, ce châssis auxiliaire, équipé d'un ou plusieurs outils de travail du sol, étant monté mobile à coulissement le long du timon dans le sens d'un rapprochement ou d'un écartement de l'organe d'attelage.

La présence d'un châssis auxiliaire coulissant sur le timon offre un grand nombre d'avantages. Elle permet notamment, de faire varier aisément la profondeur de sol travaillé sans augmenter la longueur totale de la machine de travail du sol, de positionner le châssis auxiliaire au plus près du châssis principal en bout de champ pour, lors de la manœuvre en bout de champ, éviter que le véhicule tracteur heurte le châssis auxiliaire.

Selon un mode de réalisation d'invention, la machine comprend, pour l'entraînement en déplacement à coulissement du ou d'au moins l'un des châssis auxiliaires, au moins un actionneur.

De préférence, l'actionneur est un vérin pneumatique ou hydraulique. Ainsi, l'opérateur peut, depuis le véhicule tracteur, assurer un déplacement à coulissement du châssis auxiliaire selon la nature de l'actionneur.

Selon un mode de réalisation de l'invention, ledit actionneur s'étend entre le châssis auxiliaire et le châssis principal auquel le timon d'attelage est raccordé.

Selon un mode de réalisation de l'invention, le ou au moins l'un des châssis auxiliaires comprend un fourreau traversant configuré pour entourer au moins partiellement le timon et une poutre porte-outil associée audit fourreau, le fourreau présentant un axe longitudinal transversal à l'axe longitudinal de la poutre. Il en résulte une simplicité de conception.

Selon un mode de réalisation de l'invention, la poutre porte-outil est divisée en au moins deux tronçons s'étendant de part et d'autre du fourreau.

Selon un mode de réalisation de l'invention, les, ou au moins deux des, tronçons de la poutre sont couplés au fourreau par une liaison à pivotement autour d'un axe s'étendant suivant la direction avant/arrière de la machine pour un déplacement desdits tronçons entre une position haute dite de transport dans laquelle lesdits tronçons s'étendent de manière parallèle entre eux et une position basse dite de travail dans laquelle lesdits tronçons sont alignés. Cette disposition permet un transport aisé sur route de ladite machine de travail du sol.

Selon un mode de réalisation de l'invention, le ou au moins l'un des outils de travail du sol du ou d'au moins l'un des châssis auxiliaires comprend une lame de travail du sol.

Un tel outil permet une préparation du sol par fissuration ou soulèvement du sol, préalablement à un travail du sol à l'aide d'outils équipant le châssis principal.

Selon un mode de réalisation de l'invention, les outils de travail du sol portés par le châssis principal sont organisés pour former au moins une rangée d'outils s'étendant transversalement à la direction avant/arrière de la machine, au moins une partie des outils de travail du sol de la ou d'au moins l'une des rangées d'outils étant des disques.

Selon un mode de réalisation de l'invention, le ou au moins l'un des organes d'appui au sol du châssis principal est une roue ou un rouleau.

Selon un mode de réalisation de l'invention, les organes d'appui au sol du châssis principal sont au nombre au moins de deux et comprennent un rouleau disposé à l'avant du châssis principal et au moins une roue ou un rouleau disposé à l'arrière du châssis principal.

### Brève description des dessins

L'invention sera bien comprise à la lecture de la description suivante d'exemples de réalisation, en référence aux dessins annexés dans lesquels :
[Fig. 1] représente une vue en perspective d'une machine de travail du sol conforme à l'invention en position écartée du châssis auxiliaire de l'organe d'attelage ;
[Fig. 2] représente une vue de côté d'une machine de travail du sol conforme à l'invention en position écartée du châssis auxiliaire de l'organe d'attelage ;
[Fig. 3] représente une vue de côté d'une machine de travail du sol conforme à l'invention en position écartée du châssis auxiliaire de l'organe d'attelage ;
[Fig. 4] représente une vue de côté d'une machine de travail du sol conforme à l'invention en position intermédiaire du châssis auxiliaire entre sa position rapprochée de l'organe d'attelage et sa position écartée de l'organe d'attelage ;
[Fig. 5] représente une vue de côté d'une machine de travail du sol conforme à l'invention en position rapprochée du châssis auxiliaire de l'organe d'attelage ;

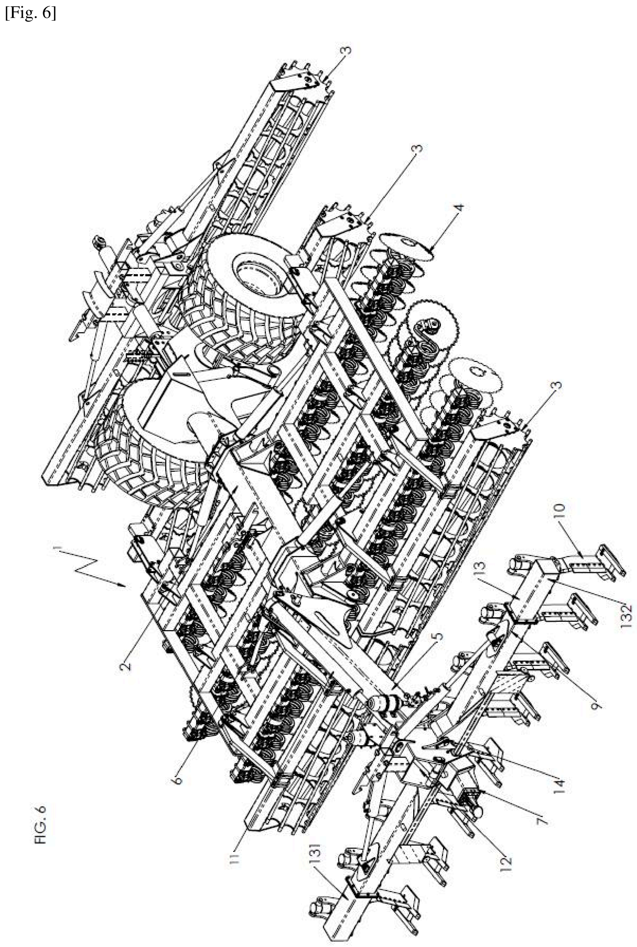

[Fig. 6] représente une vue en perspective en élévation d'une machine de travail du sol conforme à l'invention, en configuration de travail ;
[Fig. 7] représente une vue en perspective d'une machine de travail du sol conforme à l'invention, en configuration de transport ;
[Fig. 8] représente une vue de dessus d'une machine de travail du sol conforme à l'invention.

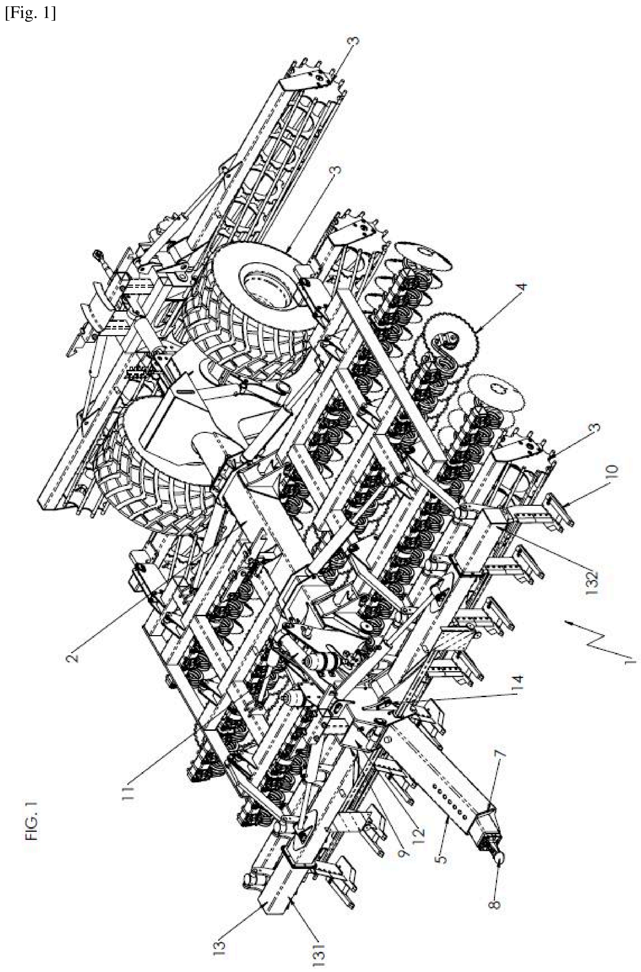

Comme illustré à la figure 1, la machine 1 de travail du sol, objet de l'invention, comprend un châssis principal 2 avec une partie avant et une partie arrière. Ce châssis principal 2 peut avoir un grand nombre de formes.

Il comprend généralement, se développant depuis la partie avant en direction de la partie arrière du châssis principal 2, au moins une poutre. Dans l'exemple représenté, cette poutre longitudinale est bordée de poutres transversales qui s'étendent chacune sur une demi-largeur de travail du sol.

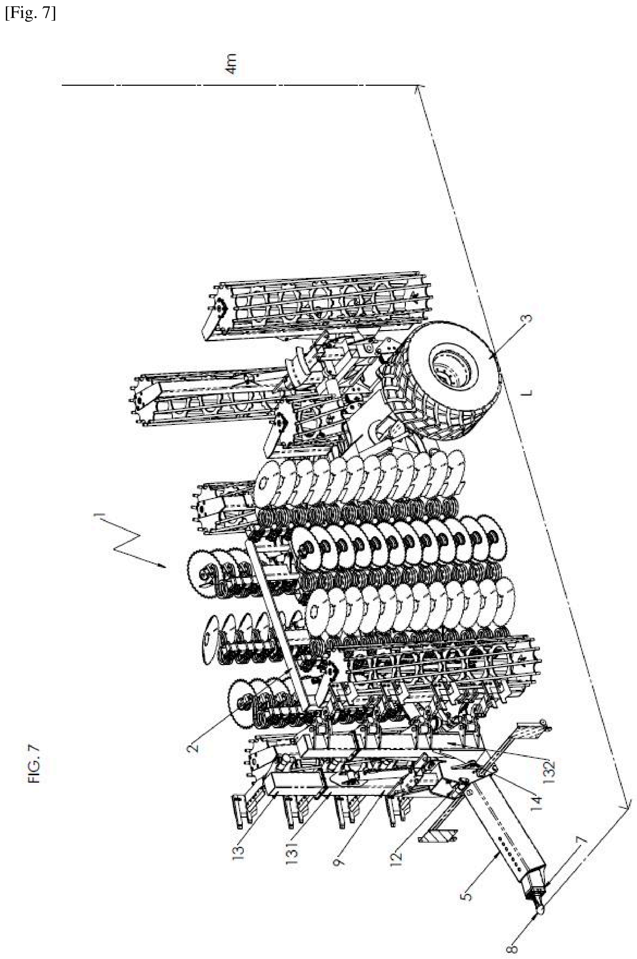

Chaque poutre transversale est, dans l'exemple représenté, articulée à pivotement à la poutre longitudinale pour un déplacement à pivotement de chaque poutre transversale entre une configuration de transport dans laquelle elle s'étend verticalement, comme illustré à la figure 7, et une configuration de travail dans laquelle elle s'étend horizontalement comme illustré à la figure 1.

Cette liaison pivotante peut ne pas être présente. Dans ce cas, la poutre transversale est fixée rigidement à la poutre longitudinale.

Idéalement, chaque poutre transversale disposée d'un côté de la poutre longitudinale est alignée avec une poutre transversale disposée de l'autre côté de la poutre longitudinale en configuration de travail.

Le châssis principal 2 comprend encore au moins un organe 3 d'appui au sol du châssis principal 2. Généralement, il est plus prévu plusieurs organes 3 d'appui au sol. De préférence, au moins un organe 3 d'appui au sol est disposé au niveau de la partie avant du châssis principal 2 et au moins un organe 3 d'appui au sol est disposé au niveau de la partie arrière du châssis principal 2. Ce ou ces organes 3 d'appui au sol peuvent être configurés pour générer un appui au sol permanent ou temporaire.

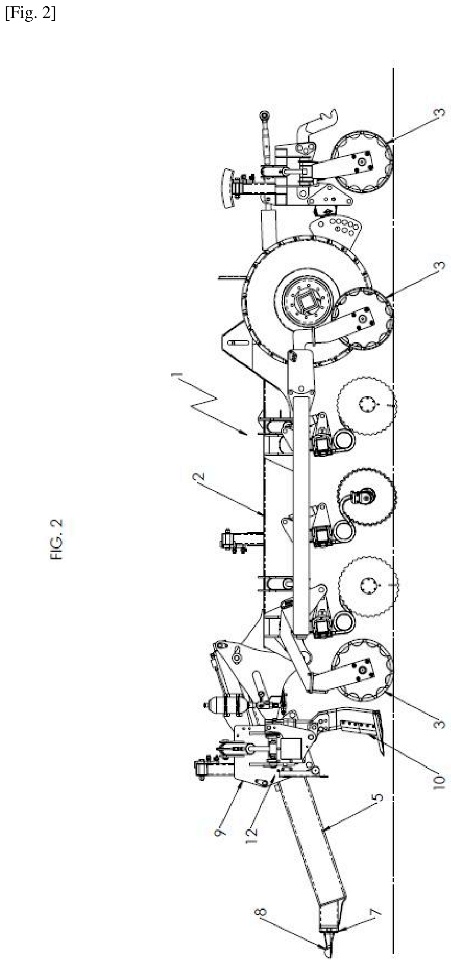

Ces organes 3 d'appui au sol peuvent être sélectivement en appui au sol comme l'illustre le passage de la figure 2 à la figure 3. Ces organes 3 d'appui au sol peuvent se présenter sous forme de roues, de rouleaux ou autres.

Dans l'exemple illustré aux figures, le châssis principal 2 est un châssis roulant au niveau de sa partie arrière. Ce châssis principal 2 est en effet équipé de deux roues qui forment des premiers organes d'appui au sol. Ces roues parallèles sont reliées l'une à l'autre par un arbre s'étendant transversalement à la poutre longitudinale du châssis principal 2, cet arbre étant couplé à la poutre longitudinale au niveau de l'extrémité arrière de la poutre longitudinale.

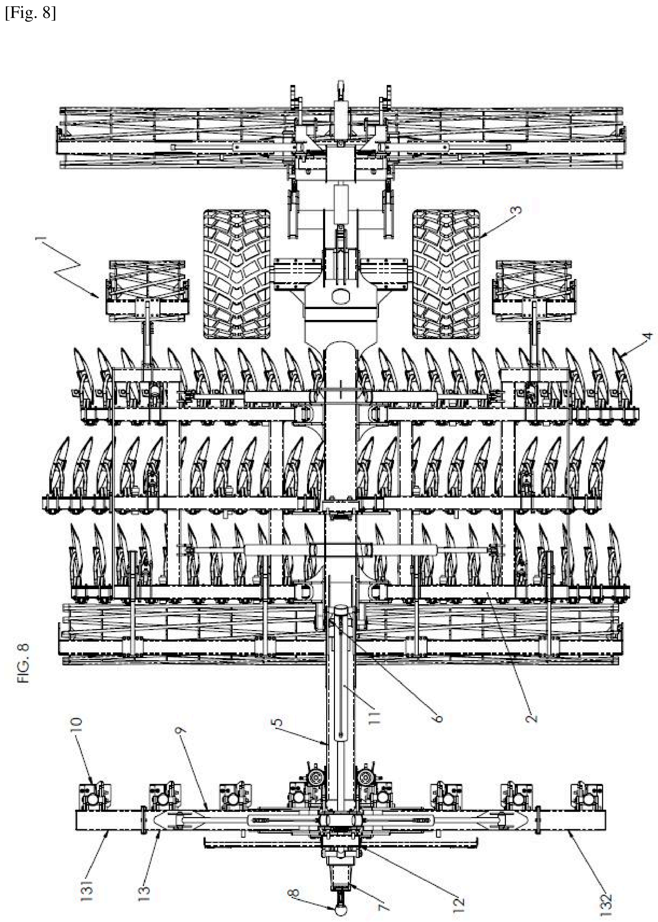

Des organes d'appui au sol supplémentaires, réalisés sous forme de rouleaux, sont disposés, l'un, à l'avant du châssis principal 2, l'autre, en arrière du châssis principal 2. Des rouleaux supplémentaires peuvent être disposés de part et d'autre des roues comme cela est visible à la figure 8.

Ces organes 3 d'appui au sol, sous forme de rouleaux, ont une fonction d'organe de terrage, c'est-à-dire qu'ils permettent de régler la profondeur de travail des outils 4 de travail du sol équipant le châssis principal 2 et qui seront décrits ci-après.

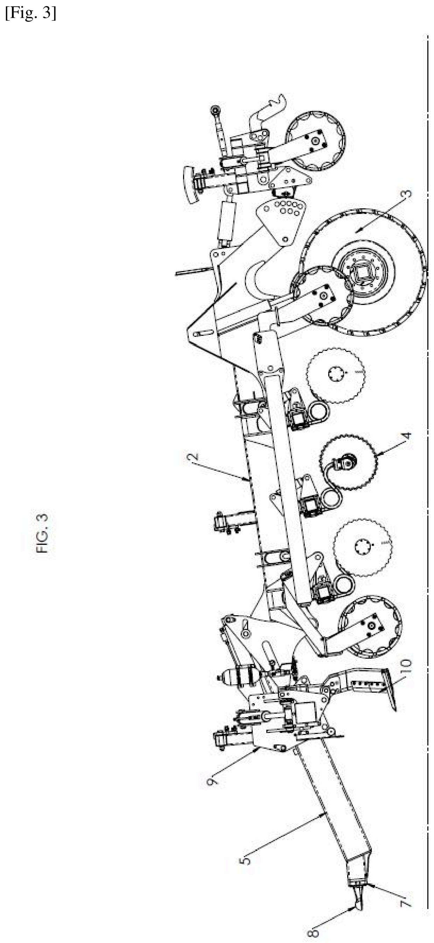

Les organes 3 d'appui au sol sont ici relevables pour permettre le passage de la machine 1 de travail du sol d'une configuration de travail dans laquelle les roues sont écartées du sol (figure 2) et le châssis principal 2 repose au sol via les rouleaux à une configuration dans laquelle les roues sont en appui au sol et le châssis principal 2 repose au sol via lesdites roues. Cette configuration peut correspondre à une configuration en bout de champ dans laquelle les roues sont en appui au sol et les rouleaux écartés du sol, comme illustré à la figure 3 par exemple, ou une configuration permettant un transport sur route. Dans la configuration permettant un transport sur route, les poutres transversales du châssis principal sont déplacées à pivotement pour occuper une position verticale.

En configuration de transport sur route, les poutres transversales du châssis principal 2, lorsqu'elles sont couplées à pivotement à la poutre principale, sont relevées. Tandis que, en configuration en bout de champ, elles restent à l'horizontale et le châssis principal 2 est en appui sur ses roues.

En résumé, dans la configuration dans laquelle le châssis principal 2 est en appui sur ses roues, les poutres transversales du châssis principal 2 peuvent être relevées ou non selon la conformation du châssis principal 2 et l'objectif visé. En variante, non représentée, la configuration transport peut correspondre à une configuration où les poutres transversales sont à l'horizontale et le châssis principal 2 est en appui sur ces roues. Cette configuration de transport existe lorsque les poutres transversales sont stationnaires et ne sont pas couplées à pivotement au châssis principal 2.

Le relevage des organes 3 d'appui au sol peut s'opérer à l'aide d'actionneurs, tels que des vérins, de manière en soi connue.

Les outils 4 de travail du sol couplés au châssis principal 2 sont organisés pour former au moins une rangée d'outils s'étendant transversalement à la direction avant/arrière de la machine 1 de travail du sol.

Au moins une partie des outils 4 de travail du sol de la ou d'au moins une des rangées d'outils sont des disques.

Dans l'exemple représenté aux figures, le châssis principal 2 est équipé depuis la partie avant vers la partie arrière du châssis principal 2 de trois rangées de disques non moteurs successives. Ces disques sont des disques concaves à concavité inversée d'une rangée à une autre.

Les outils 4 de travail du sol du châssis principal 2 peuvent être portés par des poutres qui sont couplées aux poutres transversales du châssis ou qui sont directement constituées par les poutres transversales du châssis principal 2.

En présence de poutres transversales pivotantes, comme décrit ci-dessus, chaque rangée d'outils forme des demi-rangées d'outils parallèles verticales en configuration transport de la machine 1 de travail du sol, comme illustré à la figure 7.

Le châssis principal 2 est équipé au niveau de sa partie avant d'un timon 5 d'attelage. Ce timon 5 d'attelage se présente sous forme d'un corps allongé avec l'une des extrémités dites avant du corps équipée d'un organe d'attelage 8, tel qu'une boule d'attelage. L'extrémité opposée dite arrière 6 du timon 5 d'attelage est couplée au châssis principal 2 et s'étend en saillie de la partie avant du châssis principal 2 de manière classique.

Ce timon 5 d'attelage est incliné depuis un point bas formé par l'extrémité avant 7 du timon 5 vers un point haut formé par l'extrémité arrière 6 du timon 5 pour former, avec ledit châssis principal 2, un angle ouvert en direction du sol à l'état positionné en appui du sol du ou d'au moins l'un des organes 3 d'appui au sol du châssis principal 2.

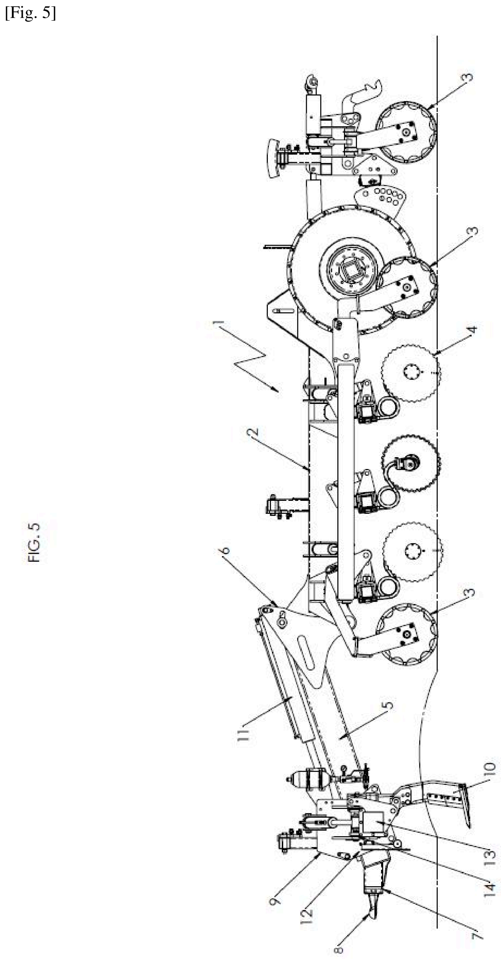

En particulier, ce timon 5 d'attelage forme, avec la poutre longitudinale du châssis principal 2, un angle compris entre 12° et 60°, comme l'illustre la figure 5.

La machine 1 de travail du sol comprend encore au moins un châssis porte-outils supplémentaire, appelé châssis auxiliaire, et représenté en 9 aux figures.

Ce châssis auxiliaire 9 est porté par le timon 5 d'attelage. En particulier, ce châssis auxiliaire 9, équipé d'un ou plusieurs outils 10 de travail du sol, est monté mobile à coulissement le long du timon 5 d'attelage dans le sens d'un rapprochement ou d'un écartement de l'organe d'attelage 8.

La machine 1 de travail du sol comprend, pour l'entraînement en déplacement à coulissement du châssis auxiliaire 9, au moins un actionneur 11. Cet actionneur 11 s'étend entre le châssis auxiliaire 9 et le châssis principal 2, auquel le timon 5 d'attelage est raccordé.

Dans l'exemple représenté, en particulier à la figure 5, cet actionneur 11 est un vérin. La position rapprochée du châssis auxiliaire 9 de l'organe d'attelage 8 est représentée à la figure 5. La position écartée du châssis auxiliaire 9 de l'organe d'attelage 8 est représentée à la figure 3.

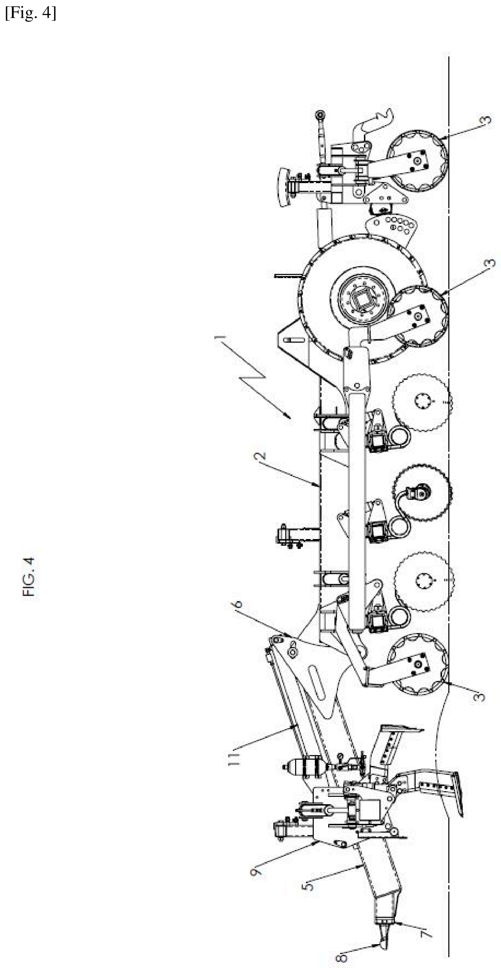

La figure 4 représente une position intermédiaire dans laquelle le châssis auxiliaire 9 est à mi-chemin entre la position rapprochée et la position écartée de l'organe d'attelage.

Dans sa version la plus simple, le châssis auxiliaire 9 comprend par exemple un fourreau 12 traversant configuré pour entourer au moins partiellement le timon 5 et une poutre 13 porte-outils associée audit fourreau 12.

Le fourreau 12 présente un axe longitudinal transversal à l'axe longitudinal de la poutre 13. La poutre 13 porte-outils peut être divisée au moment deux tronçons 131, 132 s'étendant de part et d'autre du fourreau 12. Les ou au moins deux des tronçons 131, 132 de la poutre 13 sont couplés au fourreau 12 par une liaison 14 à pivotement autour d'un axe s'étendant suivant la direction avant/arrière de la machine 1 pour un déplacement desdits tronçons 131, 132 entre une position haute dite de transport sur route, dans laquelle lesdits tronçons 131, 132 s'étendent de manière parallèle entre eux et une position basse dite de travail dans laquelle lesdits tronçons 131, 132 sont alignés.

Ces dispositions permettent de limiter l'encombrement en largeur de la machine 1 de travail du sol en configuration transport. Cette poutre 13 porte-outils peut également être réalisée sous forme d'un seul tronçon. Cette poutre 13 porte-outils s'étend suivant une largeur de travail du sol et les outils de travail du sol s'étendent à un niveau inférieur à la poutre et sont couplés à la poutre.

Dans l'exemple représenté, les outils de travail du sol équipant la poutre 13 porte-outils associée au fourreau 12, sont des lames d'ameublissement du sol en soi connue.

A nouveau, les ou au moins deux des tronçons 131, 132 de la poutre 13 sont couplés au fourreau 12 par une liaison 14 à pivotement autour d'un axe s'étendant suivant la direction avant/arrière de la machine 1 pour un déplacement desdits tronçons 131, 132 entre une position haute dite de transport dans laquelle lesdits tronçons 131, 132 s'étendent de manière parallèle entre eux et une position basse dite de travail dans laquelle lesdits tronçons 131, 132 sont alignés. Cette disposition permet de limiter l'encombrement en largeur de la machine 1 de travail du sol en configuration transport.

En configuration travail, le fait de pouvoir faire coulisser le châssis auxiliaire 9 le long du timon 5 d'attelage permet de faire varier la profondeur de travail du ou des outils 10 de travail du sol équipant ledit châssis auxiliaire 9, comme le montrent les figures 4 et 5.

Ainsi, plus le châssis auxiliaire 9 est proche de l'organe d'attelage 8 plus la profondeur de travail du sol est importante. Le réglage de la profondeur de travail s'avère particulièrement aisé.

Le déplacement à coulissement permet encore, lorsque la machine 1 de travail du sol est en bout de champ, de faciliter les manœuvres avec le véhicule tracteur. En effet, il suffit dans ce cas de passer en configuration d'appui au sol des roues du châssis puis de ramener le châssis auxiliaire en position écartée de l'organe d'attelage pour éviter que ce dernier n'entre en contact avec les roues du véhicule tracteur lors de l'opération de demi-tour en bout de champ.

On note que ces changements de configuration peuvent s'opérer sans modifier la longueur hors tout de la machine 1 de travail du sol.

## Revendications

1. Machine (1) de travail du sol comprenant un châssis dit principal (2), au moins un organe (3) d'appui au sol du châssis principal (2), des outils (4) de travail du sol couplés au châssis principal (2), un timon (5) d'attelage du châssis principal (2) raccordé à l'une des extrémités dite arrière (6) au châssis principal (2) et équipé à son extrémité dite avant (7) opposée d'un organe d'attelage (8), ledit timon (5) étant, à l'état positionné au sol du ou d'au moins l'un des organes (3) d'appui au sol, incliné depuis un point bas formé par l'extrémité avant (7) du timon (5) vers un point haut formé par l'extrémité arrière (6) dudit timon (5) pour former avec ledit châssis principal (2) un angle ouvert en direction du sol, **caractérisée en ce que** la machine (1) comprend au moins un châssis porte-outil supplémentaire dit auxiliaire (9) porté par le timon (5), ce châssis auxiliaire (9), équipé d'un ou plusieurs outils (10) de travail du sol, étant monté mobile à coulissement le long du timon (5) dans le sens d'un rapprochement ou d'un écartement de l'organe d'attelage (8).

2. Machine (1) de travail du sol selon la revendication 1, **caractérisée en ce qu'**elle comprend, pour l'entraînement en déplacement à coulissement du ou d'au moins l'un des châssis auxiliaire (9), au moins un actionneur (11).

3. Machine (1) de travail du sol selon la revendication 2, **caractérisée en ce que** ledit actionneur (11) s'étend entre le châssis auxiliaire (9) et le châssis principal (2) auquel le timon (5) d'attelage est raccordé.

4. Machine (1) de travail du sol selon l'une des revendications 1 à 3, **caractérisée en ce que** le ou au moins l'un des châssis auxiliaire (9) comprend un fourreau (12) traversant configuré pour entourer au moins partiellement le timon (5) et une poutre (13) porte-outil associée audit fourreau (12), le fourreau (12) présentant un axe longitudinal transversal à l'axe longitudinal de la poutre (13).

5. Machine (1) de travail du sol selon la revendication 4, **caractérisée en ce que** la poutre (13) porte-outil est divisée en au moins deux tronçons (131, 132) s'étendant de part et d'autre du fourreau (12).

6. Machine (1) de travail du sol selon la revendication 5, **caractérisée en ce que** les, ou au moins deux des, tronçons (131, 132) de la poutre (13) sont couplés au fourreau (12) par une liaison (14) à pivotement autour d'un axe s'étendant suivant la direction avant/arrière de la machine (1) pour un déplacement desdits tronçons (131, 132) entre une position haute dite de transport dans laquelle lesdits tronçons (131, 132) s'étendent de manière parallèle entre eux et une position basse dite de travail dans laquelle lesdits tronçons (131, 132) sont alignés.

7. Machine (1) de travail du sol selon l'une des revendications 1 à 6, **caractérisée en ce que** le ou au moins l'un des outils (10) de travail du sol du ou d'au moins l'un des châssis auxiliaires (9) comprend une lame de travail du sol.

8. Machine (1) de travail du sol selon l'une des revendications 1 à 7, **caractérisée en ce que** les outils (4) de travail du sol portés par le châssis principal (2) sont organisés pour former au moins une rangée d'outils s'étendant transversalement à la direction avant/arrière de la machine (1), au moins une partie des outils (4) de travail du sol de la ou d'au moins l'une des rangées d'outils étant des disques.

9. Machine (1) de travail du sol selon l'une des revendications 1 à 8, **caractérisée en ce que** le ou au moins l'un des organes (3) d'appui au sol du châssis principal (2) est une roue ou un rouleau.

10. Machine (1) de travail du sol selon l'une des revendications 1 à 9, **caractérisée en ce que** les organes (3) d'appui au sol du châssis principal (2) sont au nombre au moins de deux et comprennent un rouleau disposé à l'avant du châssis principal (2) et au moins une roue ou un rouleau disposé à l'arrière du châssis principal (2).
